# FASCICULE DE BREVET EUROPEEN

(11) **EP 4 353 998 B1**
(45) Date de publication et mention de la délivrance du brevet: **09.04.2025**
(21) Numéro de dépôt: 23202841.5
(22) Date de dépôt: 10.10.2023
(51) Int. Cl.: F16K 1/02, F16K 31/60, F16D 43/208, F23D 14/46, F16D 7/10, F16K 1/04

(54) **DISPOSITIF DE COMMANDE D'UN ORIFICE DE DISTRIBUTION DE GAZ D'UN ÉQUIPEMENT ET ÉQUIPEMENT LE COMPORTANT**
VORRICHTUNG ZUR STEUERUNG EINER GASABGABEÖFFNUNG EINES GERÄTES UND GERÄT MIT DIESER VORRICHTUNG
DEVICE FOR CONTROLLING A GAS DISTRIBUTION PORT OF AN EQUIPMENT AND EQUIPMENT COMPRISING SAME

(30) Priorité: 10.10.2022 FR 2210343
(43) Date de publication de la demande: 17.04.2024
(73) Titulaire: Hampiaux SAS, 54000 Nancy (FR)
(72) Inventeur: URBAIN, Joan, 54000 NANCY (FR)
(74) Mandataire: Hugues, Catherine

(56) Documents cités:
- FR-A- 1 109 246
- FR-A5- 2 080 192
- GB-A- 893 932
- US-A- 4 619 437
- US-A1- 2008 061 256
- US-A1- 2008 078 968
- US-A1- 2011 278 485

## Description

L'invention a trait à un dispositif de commande d'un orifice de distribution d'un gaz formé dans un corps d'un équipement tel que notamment un chalumeau, ledit dispositif de commande comportant un pointeau d'axe X, destiné à être monté en liaison hélicoïdale dans un passage dudit corps communiquant avec ledit orifice de distribution, et à être déplacé au moyen d'une tête de manœuvre entre une position de fermeture de l'orifice de distribution et une position d'ouverture de l'orifice de distribution, la tête de manœuvre étant équipée de moyens de limitation de la course du pointeau se déplaçant dans le sens de la position de fermeture de l'orifice de distribution.

L'invention concerne également un équipement tel que notamment un chalumeau équipé d'un tel dispositif de commande.

De tels dispositifs de commande sont disponibles sur le marché depuis de très nombreuses années et couramment mis en œuvre pour équiper différents types d'outils injecteurs de gaz, tels que des chalumeaux. Ils permettent classiquement à un opérateur manipulant leurs têtes de manœuvre, généralement définies par de simples molettes, de régler le débit de gaz, comburant ou combustible, au travers d'une insertion plus ou moins importante d'une extrémité d'allure conique du pointeau dans un conduit de distribution de gaz, et ainsi obtenir une flamme adaptée aux travaux à réaliser.

De manière connue, en position fermée, l'étanchéité au gaz s'obtient par la mise en contact de l'extrémité conique du pointeau avec l'arête vive du bord de l'ouverture d'entrée du conduit de distribution de gaz dans laquelle elle est introduite. A cet effet, et pour garantir l'obtention de l'étanchéité, il est d'usage d'exercer une force allant du pointeau vers le conduit afin d'obtenir un parfait emboîtement des pièces. Cette force résulte d'un couple de serrage appliqué par l'opérateur sur la tête de manœuvre une fois l'extrémité conique en butée sur l'arête vive.

Une étanchéité parfaite étant néanmoins souvent difficile à obtenir, y compris sur des équipements neufs, il a été observé que l'opérateur a tendance à exercer un couple démesuré sur la tête de manœuvre. Or, dans la mesure où le déplacement hélicoïdal du pointeau s'effectue en l'absence de moyens de guidage, son extrémité conique s'étend inévitablement de manière légèrement désaxée par rapport au conduit lorsqu'elle parvient au contact de son ouverture d'entrée, de sorte qu'une telle manière de procéder conduit à une importante déformation des pièces, supposant l'application d'un couple toujours plus important, ayant pour conséquence une usure prématurée et un dysfonctionnement intempestif du matériel présentant une perte totale d'étanchéité dans la position de fermeture du pointeau.

Ce problème a d'ores et déjà été mentionné dans la publication FR924072 qui préconise pour le solutionner un montage du pointeau dans le conduit de distribution de gaz non plus selon une liaison hélicoïdale, mais en translation à travers des moyens de guidage associés à une butée réglable, ainsi qu'une tête de manœuvre agissant de manière indirecte sur le pointeau.

De manière alternative, pour pallier ce même problème, il a également été proposé de concevoir le pointeau de manière telle qu'au moins son extrémité conique est réalisée en matériau plastique. Le corps d'un équipement du type chalumeau, et par conséquent le conduit de distribution de gaz qu'il comporte, étant classiquement fabriqué en laiton, une telle structure permet une déformation de l'extrémité d'allure conique du pointeau et une bonne étanchéité dans sa position de fermeture, sans avoir à appliquer un couple important sur la tête de manœuvre, et en préservant l'intégrité structurelle du conduit.

Toutefois, là encore, il a été observé que les opérateurs, soucieux d'éviter toute fuite de gaz potentiellement dangereuse, et manipulant les têtes de manœuvre des pointeaux de manière uniquement intuitive, au travers de tâtonnements, ont tendance à exercer tout de même une force excessive lorsqu'ils les déplacent vers leur position de fermeture. La déformation intempestive de l'extrémité conique en matériau plastique en résultant, se traduit là encore inévitablement par l'apparition d'un défaut d'étanchéité de l'équipement que l'opérateur entendait pourtant prévenir. FR1109246A décrit un dispositif selon le préambule de la revendication 1.

La présente invention a pour objectif de proposer une nouvelle solution au problème décrit ci-dessus, au travers de moyens permettant de limiter le couple qu'il est possible d'appliquer à un pointeau d'un dispositif de commande d'un orifice de distribution d'un gaz formé dans un corps d'un équipement tel que notamment un chalumeau, ledit pointeau étant destiné à être monté en liaison hélicoïdale dans un passage dudit corps communiquant avec ledit orifice de distribution.

En d'autres termes, la présente invention entend pallier les problèmes générés par une manipulation intuitive lors du réglage du débit des gaz circulant dans un équipement de type chalumeau, en fournissant un dispositif de commande d'un orifice de distribution d'un gaz qui soit fiable, dont la longévité est notablement améliorée par rapport aux matériels équivalents classiques, qui évite d'éventuelles étapes fastidieuses de préréglages et facilite en général le travail de l'utilisateur, de sorte à contribuer à une amélioration de la productivité, tout en conservant la puissance et la précision de flamme requises.

A cet effet, l'invention a pour objet un dispositif de commande du genre indiqué en préambule, caractérisé en ce que les moyens de limitation de la course du pointeau comportent de plus:
- au moins une encoche, d'axe Y perpendiculaire à l'axe X, formée dans la paroi périphérique de la bague d'entraînement, ladite encoche étant délimitée au moins par un fond s'étendant dans un plan d'allure parallèle à l'axe X, deux parois opposées et une paroi intérieure,
- au moins une gorge, de longueur L, ménagée dans la paroi interne du volant, présentant une première et une deuxième extrémités entre lesquelles sa profondeur décroit en considérant une rotation dans le sens horaire du volant autour de la bague d'entraînement, et
- au moins une bille montée coulissante dans ladite encoche entre une position active dans laquelle elle présente une portion logée dans l'encoche et une portion logée dans la gorge et une position inactive dans laquelle elle est intégralement logée dans l'encoche.

Par ailleurs, selon le cas, le dispositif de commande selon l'invention peut également présenter l'une ou plusieurs des caractéristiques suivantes :
- la gorge présente une section dont le rayon de courbure est en tous points différent du rayon de courbure de la bille et, au niveau de sa première extrémité, une profondeur P₀ inférieure au diamètre de la bille et au niveau de sa seconde extrémité une profondeur P₁ égale à 0 ;
- les moyens de limitation de la course du pointeau comportent également un moyen de rappel élastique s'étendant entre le fond de l'encoche et la bille, et à l'encontre duquel s'effectue le déplacement vers son état inactif de la bille ;
- le moyen de rappel élastique est défini par un ressort de compression ;
- le volant est monté en rotation sur la bague d'entraînement au travers d'un palier ;
- le volant est monté en rotation sur la bague d'entraînement au travers d'au moins un roulement à billes ;
- la bague d'entraînement est prolongée par une portion tubulaire la reliant au pointeau tandis que le roulement à billes est logé dans un espace s'étendant entre ladite portion tubulaire et une portion tubulaire prolongeant ledit volant ;
- le roulement à billes est retenu entre un épaulement s'étendant entre la bague d'entraînement et la portion tubulaire la prolongeant et un circlip disposé dans ledit espace ;
- au moins une partie du pointeau est réalisée en matériau plastique.

Il est par ailleurs à noter que l'invention a également pour objet un équipement, tel que notamment un chalumeau, comportant un corps dans lequel est formé un orifice de distribution d'un gaz, caractérisé en ce qu'il comporte un dispositif de commande présentant les spécificités mentionnées ci-dessus.

Les avantages découlant de la présente invention apparaîtront à la lecture de la description qui va suivre se rapportant à des exemples de réalisation illustrés dans les dessins joints dans lesquels :
[Fig.1] est une vue de côté en coupe d'un exemple de réalisation d'un dispositif de commande selon l'invention,
[Fig.2], [Fig.3], [Fig.4], [Fig.5] sont des vues de face du dispositif de commande de la figure 1 dont on a retiré le couvercle, illustrant son fonctionnement au cours de la manipulation de la tête de manœuvre en direction de la position de fermeture du pointeau.
[Fig.6] [Fig.7], [Fig.8] et [Fig.9] sont des vues d'un détail du dispositif de commande de la figure 1 vu de face, dont on a retiré le couvercle, illustrant son fonctionnement au cours de la manipulation de la tête de manœuvre.

Tel que mentionné ci-dessus, le dispositif de commande 1 selon l'invention est destiné au réglage du débit d'un gaz de fonctionnement d'un équipement tel que notamment un chalumeau et, à cet effet, permet à un opérateur le manipulant d'agir sur un orifice de distribution 2 de ce gaz formé dans le corps 3, en laiton ou en un matériau équivalent, de l'équipement.

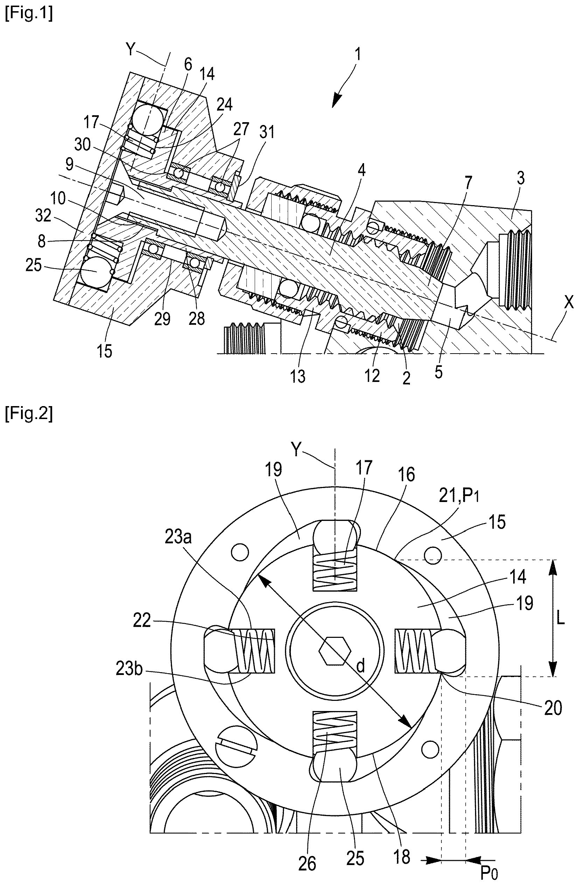

En référence à la figure 1, dans la variante de réalisation illustrée, le dispositif de commande 1 comporte de manière classique un pointeau 4 d'axe X, préférentiellement réalisé en matériau plastique mais pouvant également être conçu en un matériau tel que du laiton ou équivalent, ou dont une partie seulement, par exemple une extrémité 7 est réalisée en matériau plastique tandis que le reste de la pièce est fabriqué en laiton. Le pointeau 4 est destiné à être monté en liaison hélicoïdale, dans un passage 5 du corps 3 communiquant avec l'orifice de distribution 2, et à être déplacé au moyen d'une tête de manœuvre 6 entre une position de fermeture de l'orifice de distribution 2 et une position d'ouverture (non illustrée) de l'orifice 2.

Plus précisément, et tel qu'illustré à la figure 1, le pointeau 4 présente une extrémité 7 d'allure tronconique, destinée à venir s'engager plus ou moins profondément dans le passage 5 sous l'effet d'une rotation, selon le cas dans un sens horaire ou antihoraire et d'une translation le rapprochant ou l'éloignant du passage 5. Ce mouvement lui est conféré au moyen de la tête de manœuvre 6 présentant une emprunte 8 de section carrée, emmanchée et fixée au moyen d'une vis 9 sur une extrémité 10 de section carrée complémentaire du pointeau 4 et permettant de transmettre le couple. On remarquera par ailleurs que le pointeau 4 est muni d'une portion filetée 11, adaptée pour coopérer avec une portion taraudée 12 d'un manchon de guidage 13. Celui-ci est monté sur le corps 3 de manière telle que son axe soit aligné avec celui du passage 5, de sorte que lorsque le pointeau 4 est inséré dans le manchon de guidage 13, son axe X est sensiblement confondu avec celui du passage 5.

Dans le cadre de l'invention, il a par ailleurs été imaginé d'équiper la tête de manœuvre 6 de moyens de limitation de la course du pointeau 4 lorsque celui-ci se déplace dans le sens de la position de fermeture de l'orifice de distribution 2.

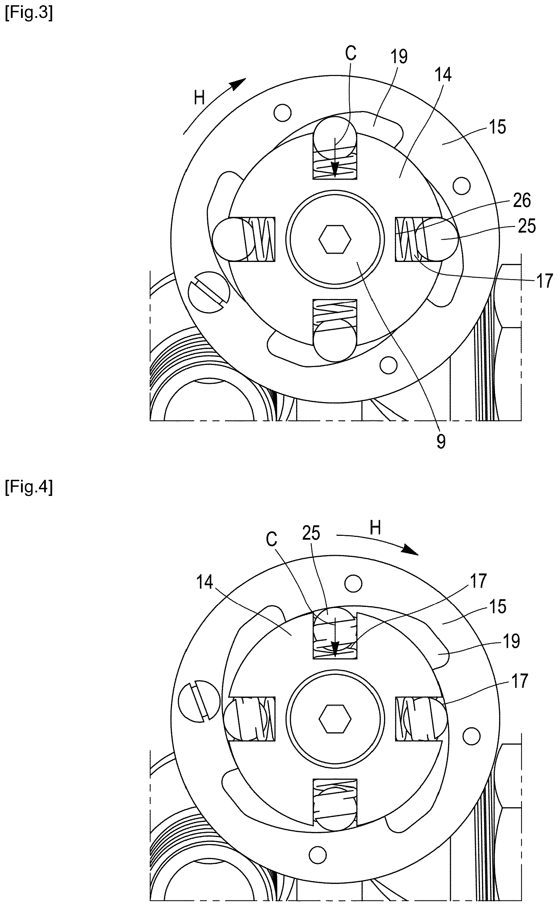

A cet effet, dans la variante de réalisation illustrée, la tête de manœuvre 6 comporte (cf. fig. 1 et 2) une bague d'entraînement 14 d'allure générale cylindrique, comprenant l'empreinte 8 de section carrée, et s'étendant dans l'axe X, tandis que les moyens de limitation de la course du pointeau 4 comportent ici:
- un volant 15 monté en rotation autour de l'axe X sur la bague d'entraînement 14 et présentant une paroi interne 16 ajustée au diamètre d de cette dernière,
- quatre encoches 17, d'axe Y perpendiculaire à l'axe X, formées dans la paroi périphérique 18 de la bague d'entraînement 14, et régulièrement réparties autour de celle-ci, chacune d'entre elles étant délimitée par un fond 22 s'étendant dans un plan d'allure parallèle à l'axe X, deux parois opposées 23a, 23b s'étendant dans un plan d'allure parallèle à l'axe X, et une paroi intérieure 24,
- quatre gorges 19, de longueur L, ménagées à intervalles réguliers dans la paroi interne 16 du volant 15, présentant une première et une deuxième extrémités 20, 21 entre lesquelles sa profondeur décroit en considérant une rotation dans le sens horaire du volant 15 autour de la bague d'entraînement 14, et
- quatre billes 25 montées coulissantes chacune dans une encoche 17 entre une position active (cf. fig. 1 et 2 notamment) dans laquelle elles présentent une portion logée dans l'encoche 17 et une portion logée dans une gorge 19 du volant 15, et une position inactive (cf. fig. 4) dans laquelle elles sont intégralement logées dans l'encoche 17 correspondante.

Conformément à une caractéristique de l'invention, chaque gorge 19 présente une section dont le rayon de courbure est en tous points différent du rayon de courbure d'une bille 25 et, au niveau de sa première extrémité 20, une profondeur P₀ inférieure au diamètre d'une bille 25 et au niveau de sa seconde extrémité une profondeur P₁ égale à 0. Il est à noter que dans la variante de réalisation illustrée, chaque gorge 19 présente en fait une profondeur sensiblement constante et égale à P₀ sur un premier tronçon s'étendant depuis sa première extrémité 20, puis sa profondeur diminue progressivement jusqu'à être égale à 0 au niveau de sa seconde extrémité 21.

Il est également à noter que chaque encoche 17 héberge un ressort de compression 26 s'étendant entre son fond 22 et la bille 25 et à l'encontre duquel s'effectue le déplacement vers son état inactif de cette dernière.

De plus, selon une autre caractéristique avantageuse de l'invention et tel que visible à la figure 1, le volant 15 est monté en rotation sur la bague d'entraînement 14 que comporte la tête de manœuvre 6 au travers de deux roulements à billes 27. Tel qu'illustré, ils sont logés dans un espace s'étendant entre une portion tubulaire 28 prolongeant la bague d'entraînement 14 et une portion tubulaire 29 prolongeant le volant 15. Un épaulement 30 ménagé entre la bague d'entraînement 14 et la portion tubulaire 28 la prolongeant ainsi qu'un circlip 31, permettent de fermer ledit espace et d'y retenir les roulements à billes 27.

D'autre part, en référence à la figure 1, le dispositif de commande 1 comporte également un couvercle 32 fixé au volant 15, permettant essentiellement de conférer à l'ensemble une protection contre l'introduction de salissures et un aspect esthétique plus agréable.

En pratique, afin de régler le débit d'un gaz de fonctionnement d'un équipement tel qu'un chalumeau muni d'un dispositif de commande 1, il suffit à un opérateur de manipuler le volant 15 pour agir sur la bague d'entraînement 14 et entraîner la rotation du pointeau 4 en direction de sa position d'ouverture ou de sa position de fermeture.

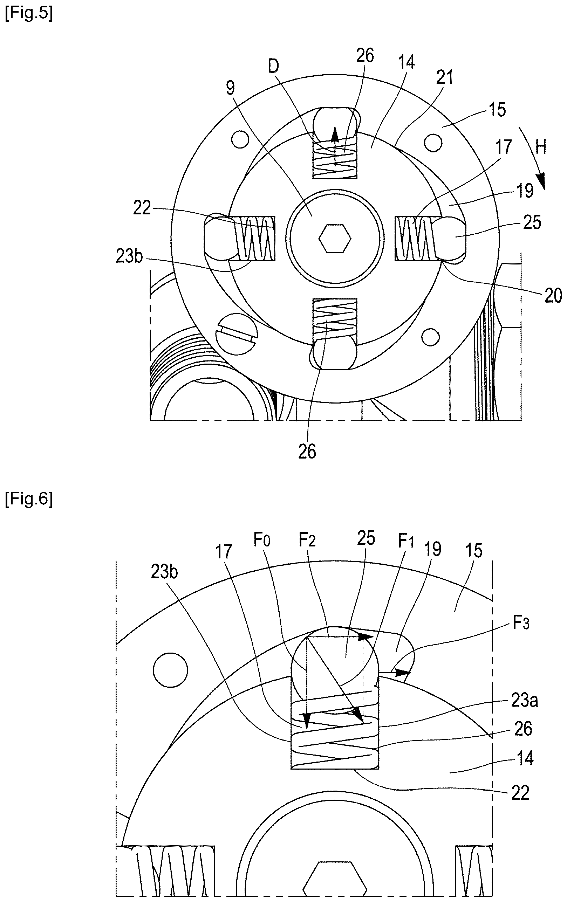

La rotation du volant 15 permet de provoquer un déplacement des billes 25 de leur position active vers leur position inactive en entraînant la compression du ressort 26 (cf. fig. 2 à 4, et flèche C), et de leur position inactive vers leur position active (cf. fig. 5 dans laquelle les billes ont retrouvé la position de la fig. 2) sous l'effet de la détente de celui-ci (flèche D).

En fait, tant que l'extrémité d'allure tronconique 7 n'est pas en contact avec l'ouverture d'entrée du passage 5 formé dans le corps 3 du chalumeau, une rotation en sens horaire (Flèche H) du volant 15 est transmise à la bague d'entraînement 14 via les billes 25 de la manière suivante :
- la compression du ressort 26 provoque un effort normal à la surface de contact entre une bille 25 et le volant 15 (flèche F₁, cf. fig. 6). Cet effort peut être décomposé en deux forces résultantes (flèches F₀ et F₂), dont l'une tend à déplacer la bille 25 vers la droite (flèche F₂). Cette force est répercutée par la bille 25 directement sur la paroi 23a de la bague d'entraînement 14 (flèche F₃) ce qui entraîne ce dernier en rotation. Le pointeau 4 étant monté en liaison hélicoïdale dans le corps 3 du chalumeau (liaison vis-écrou), la rotation de la bague d'entraînement 4 fixée sur le pointeau 4 entraîne non seulement une rotation mais également une translation de ce dernier et par conséquent un rapprochement de l'extrémité d'allure tronconique 7 du passage 5 formé dans le corps 3 du chalumeau.

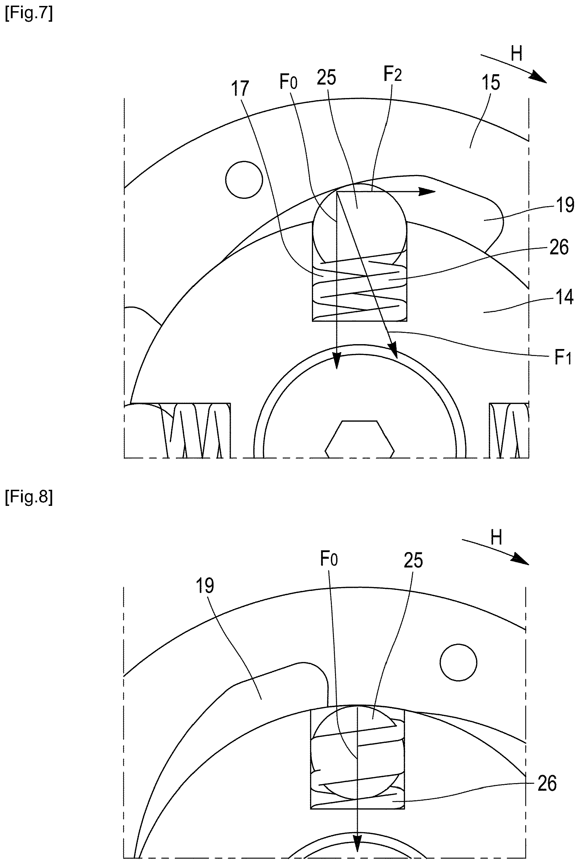

L'arrivée en contact de l'extrémité d'allure tronconique 7 du pointeau 4 avec l'ouverture d'entrée du passage 5 gêne tout déplacement en translation ultérieur en direction de sa position de fermeture du pointeau 4, et par conséquent toute rotation en sens horaire de la bague d'entraînement 14. En revanche, à ce stade, le volant 15 peut encore être animé d'un déplacement dans le sens horaire (cf. fig. 7). Ceci a pour effet de comprimer un peu plus chaque ressort 26 au travers de chaque bille 25 et d'augmenter l'intensité de l'effort résultant, ce qui permet de continuer à légèrement entraîner la bague d'entraînement 14 en rotation et d'insérer un peu plus la portion d'allure tronconique 7 du pointeau 4 dans le passage 5 du corps 3 pour obtenir finalement une position de fermeture du pointeau 4 dans laquelle l'orifice de distribution 2 est parfaitement étanche.

En fait, le principe se poursuit jusqu'à ce que le volant 15 atteigne la position dans laquelle les ressorts 26 sont complètement comprimés et où aucune force résultante n'existe (cf. fig. 8), chaque bille 25 étant alors située dans sa position inactive dans laquelle elle est logée dans son intégralité dans une encoche 17 de la bague d'entraînement 14.

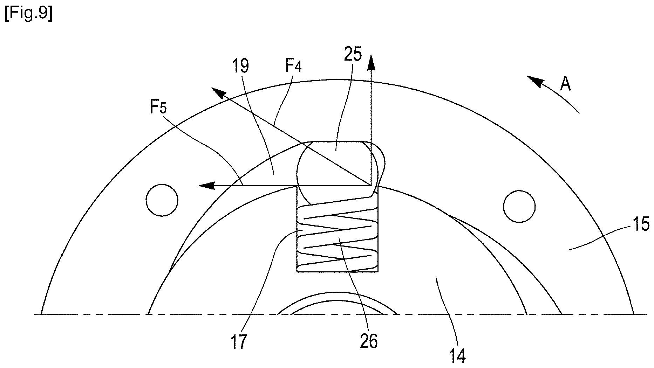

Un déplacement en sens antihoraire (cf. fig. 9, flèche A) du volant 15 permet à un opérateur de déplacer le pointeau 4 vers sa position d'ouverture de l'orifice de distribution 2. Lors d'une telle manipulation, chaque bille 25 est en butée entre la première extrémité 20 d'une gorge 19 et la paroi 23b d'une encoche 17. L'effort normal à la surface de contact entre une bille 25 et le volant 15 (flèche F4) génère une composante vers la gauche (flèche F₅) qui entraîne la rotation de la bague d'entraînement 14 en sens antihoraire et un déplacement en translation du pointeau 4 vers sa position d'ouverture.

Tel qu'il ressort de ce qui précède, l'invention permet d'atteindre les objectifs mentionnés en préambule, et de fournir un dispositif de commande d'un orifice de distribution d'un gaz formé dans un corps d'un équipement de type chalumeau permettant de garantir l'étanchéité de cet orifice dans la position de fermeture du pointeau, indépendamment de toute dégradation et usure prématurée des pièces en contact, au travers de gestes simples et n'impliquant aucun préréglage fastidieux et chronophage.

Ces objectifs sont avantageusement atteints au travers de la mise en œuvre de moyens innovants permettant de limiter le couple de serrage de l'ensemble « pointeau 4 + tête de manœuvre 6 », et d'assister l'opérateur lors de sa manipulation en l'empêchant d'appliquer un couple de serrage démesuré.

L'invention permet également d'utiliser des matériaux plastiques pour fabriquer au moins la partie d'allure conique du pointeau ce qui contribue également à améliorer davantage l'étanchéité d'un outil tel qu'un chalumeau en position de fermeture du pointeau et par conséquent la sécurité de l'opérateur.

## Revendications

1. Dispositif (1) de commande d'un orifice de distribution (2) d'un gaz formé dans un corps (3) d'un équipement de type chalumeau, ledit dispositif de commande comportant un pointeau (4) d'axe X, destiné à être monté en liaison hélicoïdale dans un passage (5) dudit corps (3) communiquant avec ledit orifice de distribution (2), et à être déplacé au moyen d'une tête de manœuvre (6) entre une position de fermeture de l'orifice de distribution (2) et une position d'ouverture de l'orifice (2) de distribution, la tête de manœuvre (6) étant équipée de moyens de limitation de la course du pointeau (4) se déplaçant dans le sens de la position de fermeture de l'orifice de distribution (2), la tête de manœuvre (6) comportant une bague d'entraînement (14) d'allure cylindrique s'étendant dans l'axe X, les moyens de limitation de la course du pointeau (4) comportant un volant (15) monté en rotation autour de l'axe X sur la bague d'entraînement (14) et présentant une paroi interne (16) ajustée au diamètre d de la bague d'entraînement (14),
**caractérisé en ce que** les moyens de limitation de la course du pointeau (4) comportent de plus:
- au moins une encoche (17), d'axe Y perpendiculaire à l'axe X, formée dans la paroi périphérique de la bague d'entraînement (14), ladite encoche (17) étant délimitée au moins par un fond (22) s'étendant dans un plan d'allure parallèle à l'axe X, deux parois opposées (23a, 23b) et une paroi intérieure (24),
- au moins une gorge (19), de longueur L, ménagée dans la paroi interne (16) du volant (15), présentant une première et une deuxième extrémités (20, 21) entre lesquelles sa profondeur décroit en considérant une rotation dans le sens horaire du volant (15) autour de la bague d'entraînement (14), et
- au moins une bille (25) montée coulissante dans ladite encoche (17) entre une position active dans laquelle elle présente une portion logée dans l'encoche (17) et une portion logée dans la gorge (19) et une position inactive dans laquelle elle est intégralement logée dans l'encoche (17).

2. Dispositif (1) de commande selon la revendication 1, **caractérisé en ce que** la gorge (19) présente une section dont le rayon de courbure est en tous points différent du rayon de courbure de la bille (25) et, au niveau de sa première extrémité (20), une profondeur P₀ inférieure au diamètre de la bille (25) et au niveau de sa seconde extrémité (21) une profondeur P₁ égale à 0.

3. Dispositif (1) de commande selon l'une quelconque des revendications 1 ou 2, **caractérisé en ce que** les moyens de limitation de la course du pointeau (4) comportent également un moyen de rappel élastique s'étendant entre le fond (22) de l'encoche (17) et la bille (25) et à l'encontre duquel s'effectue le déplacement vers son état inactif de la bille (25).

4. Dispositif (1) selon la revendication 3, **caractérisé en ce que** le moyen de rappel élastique est défini par un ressort de compression (26).

5. Dispositif (1) de commande selon l'une quelconque des revendications 1 à 4, **caractérisé en ce que** le volant (15) est monté en rotation sur la bague d'entraînement (14) au travers d'un palier.

6. Dispositif (1) de commande selon la revendication 5, **caractérisé en ce que** le volant (15) est monté en rotation sur la bague d'entraînement (14) au travers d'au moins un roulement à billes (27).

7. Dispositif (1) de commande selon la revendication 6, **caractérisé en ce que** la bague d'entraînement (14) est prolongée par une portion tubulaire (28) la reliant au pointeau (4) et **en ce que** le roulement à billes (27) est logé dans un espace s'étendant entre ladite portion tubulaire (28) et une portion tubulaire (29) prolongeant ledit volant (15).

8. Dispositif (1) de commande selon la revendication 7, **caractérisé en ce que** le roulement à billes (27) est retenu entre un épaulement (30) s'étendant entre la bague d'entraînement (14) et la portion tubulaire (28) la prolongeant et un circlip (31) disposé dans ledit espace.

9. Dispositif (1) de commande selon l'une quelconque des revendications précédentes, **caractérisé en ce qu'**au moins une partie du pointeau (4) est réalisée en matériau plastique.

10. Équipement comportant un corps (3) dans lequel est formé un orifice de distribution (2) d'un gaz, **caractérisé en ce qu'**il comporte un dispositif de commande (1) selon l'une quelconque des revendications 1 à 9.

## Patentansprüche

1. Steuervorrichtung (1) für eine Verteilungsöffnung (2) für ein Gas, das in einem Körper (3) einer brennerartigen Ausrüstung ausgebildet wird, die Steuervorrichtung umfassend eine Düsennadel (4) auf der X-Achse, die dazu bestimmt ist, in schraubenförmiger Verbindung in einem Durchgang (5) des Körpers (3) montiert zu werden, der mit der Verteilungsöffnung (2) in Verbindung steht, und mittels eines Betätigungskopfs (6) zwischen einer Schließposition der Verteilungsöffnung (2) und einer Öffnungsposition der Verteilungsöffnung (2) verschoben zu werden, wobei der Betätigungskopf (6) mit Mitteln für die Begrenzung des Weges der Düsennadel (4) ausgestattet ist, die sich in der Richtung der Schließposition der Verteilungsöffnung (2) bewegt,
der Betätigungskopf (6) umfassend einen zylindrisch verlaufenden Antriebsring (14), der sich entlang der X-Achse erstreckt, die Mittel für die Begrenzung des Weges der Düsennadel (4) umfassend ein Schwungrad (15), das um die X-Achse drehbar auf dem Antriebsring (14) montiert ist und eine Innenwand (16) aufweist, die an den Durchmesser d des Antriebsrings (14) angepasst ist,
**dadurch gekennzeichnet, dass** die Mittel für die Begrenzung des Weges der Düsennadel (4) ferner umfassen:
- mindestens eine Kerbe (17) auf der Y-Achse senkrecht zu der X-Achse, die in der Umfangswand des Antriebsrings (14) ausgebildet ist, wobei die Kerbe (17) mindestens durch einen Boden (22), der sich in einer zu der X-Achse parallel verlaufenden Ebene erstreckt, zwei gegenüberliegende Wände (23a, 23b) und eine innere Wand (24) begrenzt ist,
- mindestens eine Nut (19) mit der Länge L, die in der Innenwand (16) des Schwungrads (15) gebildet ist, die ein erstes und ein zweites Ende (20, 21) aufweist, zwischen denen ihre Tiefe abnimmt, unter Berücksichtigung einer Drehung des Schwungrads (15) im Uhrzeigersinn um den Antriebsring (14) und
- mindestens eine Kugel (25), die in der Kerbe (17) zwischen einer aktiven Position, in der sie einen in der Kerbe (17) untergebrachten Abschnitt und einen in der Nut (19) untergebrachten Abschnitt aufweist, und einer inaktiven Position, in der sie vollständig in der Kerbe (17) untergebracht ist, verschiebbar montiert ist.

2. Steuervorrichtung (1) nach Anspruch 1, **dadurch gekennzeichnet, dass** die Nut (19) einen Bereich, dessen Krümmungsradius an allen Stellen von dem Krümmungsradius der Kugel (25) unterschiedlich ist, und an ihrem ersten Ende (20) eine Tiefe P₀, die kleiner als der Durchmesser der Kugel (25) ist, und an ihrem zweiten Ende (21) eine Tiefe P₁, die gleich 0 ist, aufweist.

3. Steuervorrichtung (1) nach einem der Ansprüche 1 oder 2,
**dadurch gekennzeichnet, dass** die Mittel für die Begrenzung des Weges der Düsennadel (4) ferner ein elastisches Rückstellmittel umfassen, das sich zwischen dem Boden (22) der Kerbe (17) und der Kugel (25) erstreckt und gegen das die Bewegung der Kugel (25) zu ihrem inaktiven Zustand hin erfolgt.

4. Vorrichtung (1) nach Anspruch 3, **dadurch gekennzeichnet, dass** das elastische Rückstellmittel durch eine Druckfeder (26) definiert ist.

5. Steuervorrichtung (1) nach einem der Ansprüche 1 bis 4,
**dadurch gekennzeichnet, dass** das Schwungrad (15) an dem Antriebsring (14) durch ein Lager drehbar montiert ist.

6. Steuervorrichtung (1) nach Anspruch 5, **dadurch gekennzeichnet, dass** das Schwungrad (15) an dem Antriebsring (14) durch mindestens ein Kugellager (27) drehbar montiert ist.

7. Steuervorrichtung (1) nach Anspruch 6, **dadurch gekennzeichnet, dass** der Antriebsring (14) durch einen rohrförmigen Abschnitt (28) verlängert ist, der ihn mit der Düsennadel (4) verbindet, und dadurch, dass das Kugellager (27) in einem Raum untergebracht ist, der sich zwischen dem rohrförmigen Abschnitt (28) und einem rohrförmigen Abschnitt (29), der das Schwungrad (15) verlängert, erstreckt.

8. Steuervorrichtung (1) nach Anspruch 7, **dadurch gekennzeichnet, dass** das Kugellager (27) zwischen einer Schulter (30), die sich zwischen dem Antriebsring (14) und dem ihn verlängernden rohrförmigen Abschnitt (28) erstreckt, und einem in dem Raum angeordneten Sicherungsring (31) gehalten wird.

9. Steuervorrichtung (1) nach einem der vorstehenden Ansprüche, **dadurch gekennzeichnet, dass** mindestens ein Teil der Düsennadel (4) aus Kunststoff hergestellt ist.

10. Ausrüstung, umfassend einen Körper (3), in dem eine Verteilungsöffnung (2) für ein Gas ausgebildet ist, **dadurch gekennzeichnet, dass** sie eine Steuervorrichtung (1) nach einem der Ansprüche 1 bis 9 umfasst.

## Claims

1. Device (1) for controlling a gas dispensing opening (2) formed in a body (3) of a torch apparatus, said control device comprising a valve (4) of axis X, intended to be mounted via a helical connection in a passage (5) of said body (3) which communicates with said dispensing opening (2), and to be moved by means of an operating head (6) between a position that closes the dispensing opening (2) and a position that opens the dispensing opening (2), the operating head (6) being equipped with means for limiting the travel of the valve (4) moving in the direction of the position that closes the dispensing opening (2),
the operating head (6) comprising a cylindrical drive ring (14) extending in the X axis, the means for limiting the travel of the valve (4) comprising a flywheel (15) rotatably mounted about the X axis on the drive ring (14) and having an inner wall (16) adjusted to the diameter d of the drive ring (14),
**characterized in that** the means for limiting the travel of the valve (4) further comprise:
- at least one notch (17), of axis Y perpendicular to axis X, formed in the circumferential wall of the drive ring (14), said notch (17) being delimited at least by a bottom (22) extending in a plane parallel to axis X, two opposite walls (23a, 23b) and an inner wall (24),
- at least one groove (19), of length L, provided in the inner wall (16) of the flywheel (15), having first and second ends (20, 21) between which its depth decreases on the basis of a clockwise rotation of the flywheel (15) around the drive ring (14), and
- at least one ball (25) slidably mounted in said notch (17) between an active position in which a portion thereof is housed in the notch (17) and a portion is housed in the groove (19), and an inactive position in which it is housed entirely in the notch (17).

2. Control device (1) according to claim 1, **characterized in that** the groove (19) has a cross-section of which the radius of curvature is different at all points from the radius of curvature of the ball (25) and, at its first end (20), a depth P₀ less than the diameter of the ball (25) and, at its second end (21), a depth P₁ equal to 0.

3. Control device (1) according to any of claims 1 or 2,
**characterized in that** the means for limiting the travel of the valve (4) also comprise an elastic return means which extends between the bottom (22) of the notch (17) and the ball (25) and against which the ball (25) is moved toward its inactive state.

4. Device (1) according to claim 3, **characterized in that** the elastic return means is defined by a compression spring (26).

5. Control device (1) according to any of claims 1 to 4, **characterized in that** the flywheel (15) is rotatably mounted on the drive ring (14) via a bearing.

6. Control device (1) according to claim 5, **characterized in that** the flywheel (15) is rotatably mounted on the drive ring (14) via at least one ball bearing (27).

7. Control device (1) according to claim 6, **characterized in that** the drive ring (14) is extended by a tubular portion (28) connecting it to the valve (4) and **in that** the ball bearing (27) is housed in a space extending between said tubular portion (28) and a tubular portion (29) extending said flywheel (15).

8. Control device (1) according to claim 7, **characterized in that** the ball bearing (27) is retained between a shoulder (30) extending between the drive ring (14) and the tubular portion (28) extending it and a snap ring (31) arranged in said space.

9. Control device (1) according to any of the preceding claims, **characterized in that** at least part of the valve (4) is made of plastics material.

10. Apparatus comprising a body (3) in which a gas dispensing opening (2) is formed, **characterized in that** it comprises a control device (1) according to any of claims 1 to 9.
